Europäisches Patentamt

European Patent Office

Office européen des brevets

(11) Publication number: 0 321 114
A2

(12) EUROPEAN PATENT APPLICATION

(21) Application number: 88311210.4

(22) Date of filing: 25.11.88

(51) Int. Cl.⁴: B29C 65/00 , B29C 65/34

(30) Priority: 10.12.87 GB 8728888

(43) Date of publication of application:
21.06.89 Bulletin 89/25

(84) Designated Contracting States:
BE CH DE ES FR GB IT LI NL SE

(71) Applicant: IMPERIAL CHEMICAL INDUSTRIES PLC
Imperial Chemical House Millbank
London SW1P 3JF(GB)

(72) Inventor: Booth, Christoper Glyn
38 Rothesay Grove Nunthorpe
Middlesbrough Cleveland TS7 0LL(GB)

(74) Representative: Graham, John George et al
Legal Dept. Patents PO Box 6 Bessemer Road
Welwyn Garden City Hertfordshire AL7 1HD(GB)

(54) Method of bonding materials.

(57) A method of bonding together at least two members of structural material at least one of which is a fibre reinforced thermoformable composite material comprising assembling a plurality of electrically conductive elements between two surfaces of bodies of the structural materials, the elements extending beyond the surfaces of the bodies to provide means for passing a current through the elements pressing the assembly together to provide positive contact between the elements and the bodies, passing a current through the conductive elements to melt the polymer of the surface regions of the thermoformable composite body, characterised in that the heating and pression operation is conducted whilst at least these portions of the elements extending from between the bodies are immersed in a heat conductive liquid.

## METHOD OF BONDING MATERIALS

This invention relates to a method of bonding together pieces of reinforced thermoformable composite materials.

Currently, there is widespread interest in the development of thermoformable composite materials containing high volumes of reinforcing fibres. In a preferred form the fibres are present as continuous, collimated fibres with the thermoformable polymer of the matrix being present to wet and contact the surface of the individual filaments as far as is possible. The concentration of fibres is maximised to make the most effective use of high strength, high modulus fibres in order to maximise the properties attainable, the physical properties of the fibres generally far exceeding those of the thermoformable polymer matrix. Typical reinforced composite materials are described in European Patent No. 56703.

Whilst excellent properties can be obtained from such composite materials, particularly where the thermoformable material is a high temperature performance polymer, the presence of the high concentrations of continuous fibres introduces problems of fabricating the composite materials into useful shaped articles. One such problem is encountered in situations where it is necessary to fabricate articles by bonding together two or more pieces of reinforced composite material. Because the high volume fibre composites have relatively low polymer contents at the surface and because the surfaces are generally not perfectly flat it is virtually impossible to form a good bond by the known techniques of heat softening the composite and applying pressure to abutting or overlaid pieces of composite. An improvement in the bonding can be achieved by the known technique of using a thermoplastic polymer implant containing elements of continuous electrically conducting fibres, by means of which electrical heating can be applied to melt the polymer. If the implant is heated whilst between pieces of composite material which are pressed together improved bonding can be achieved. However, practical experience of this technique has shown that problems arise when the length of the element path between the pieces of composite is greater than about 40 mm. At longer path lengths bonds are only achieved at the edges of the composite and these edges appear degraded and distorted. It is believed that local short circuiting between the conducting fibres, such as carbon filaments, in the implant and those in the composite give rise to polymer degradation and distortion of the composite at these regions. Problems and restrictions on the use of the process also arise because the length of the exposed elements between the electrical contacts and the entry point of the elements between the pieces of composite must be minimised and is preferably less than 1 mm if local overheating at the point of entry of the implant is to be minimised. An improved method of joining has now been developed.

According to the invention there is provided a method of bonding together at least two members of structural material at least one of which is a fibre reinforced thermoformable composite material comprising assembling a plurality of electrically conductive elements between two surfaces of bodies of the structural materials, the elements extending beyond the surfaces of the bodies to provide means for passing a current through the elements, pressing the assembly together to provide positive contact between the elements and the bodies, passing a current through the conductive elements to melt the polymer of the surface regions of the thermoformable composite body, characterised in that the heating and pressing operation is conducted whilst at least those portions of the elements extending from between the bodies are immersed in a heat conductive liquid.

In a preferred embodiment of the invention, the electrically conducting elements are embedded in a thermoformable polymer which is the same as or compatible with the thermoformable body of the reinforced composite. By "compatible with" is meant that a molten mixture of the two thermoformable components will exhibit a single glass transition temperature peak when observed using differential scanning calorimetry (DSC). This embodiment is particularly preferred because the implant so formed, being the same as or compatible with the composite body, greatly reduces any weaknesses in the bonded composites. In some applications the presence of sacrificial conducting metal elements at the bond would be unacceptable.

Surprisingly, the edge damage which occurs with the prior art proposals is substantially absent even when element path lengths of 300 mm or more are used. The limitation on the length of exposed elements between the composite body and the electrical contacts is also removed.

In a preferred embodiment of the invention, the elements are used in conjunction with thin films of polymer of an areal shape corresponding to the paths of the implanted elements. The films may be inserted as loose films above and blow the implant. Alternatively, polymer of polymer rich films can be laid down on the surfaces of the bodies to be joined by melt or solution coating. The nature of the polymer of the film should be the same as or compatible with the polymer of the composite. In addition to providing an improved bond these films permit a greater latitude in choosing the nature of the respective bodies to be joined.

A preferred conductive element is carbon (graphite) fibre, although any conductive filaments may be used.

Carbon fibre is particularly suitable because many composites of very high performance are based on carbon fibre reinforcement of thermoformable polymers, thus providing a ready source of conductive filaments embedded in a thermoformable polymer. Such materials, having continuous carbon filaments, are ideally suited as an implant. Filaments which are normally essentially non-conducting are also suitable providing they are treated to coat them with a conductive coating material.

The heat conductive liquid in which the operation takes place may be any conductive liquid, preferably non-flammable, and for convenience is water. Higher boiling materials can be used as required.

In order to obtain reproducible, strong bonds it is necessary to ensure that a number of factors are controlled. In the first place excellent electrical contract should be maintained during the operation over the width of the implant. When the implant is a prepreg material of conducting filaments impregnated with a polymer matrix, the prepreg material is conveniently produced as described in EP 56703. These are particularly suitable because the reinforced composite materials themselves are formed in the form of quasiisotropically reinforced bodies by stacking layers of such prepregs with the continuous fibres oriented in chose directions followed by consolidation under heat and pressure. When these prepregs are used as implants, the electrical contacts possible at the ends of the elements are hampered by the presence of the impregnated polymer. It is generally necessary to remove the polymer at the points of electrical contact at the ends of the elements to ensure that the current flows evenly along the implant across the whole width of the implant. This cleaning of the filaments is best achieved, particularly when the impregnated polymer is a high performance, chemically resistant polymer, by burning off the contact areas with an oxy-acetylene torch followed by washing. For the same reasons of requiring uniformity of heating and control of quality of the bond, a constant current power supply is preferably used.

For a given area requiring bonding, the implant may be positioned so that the filaments of the implant are aligned along the longest dimension of the path, thus minimising the electrical contact area required at the ends of the implant. Alternatively, the implant can be such that the filaments are aligned along the shortest dimension, thus requiring that the current is supplied evenly across the longer dimension of the implant. The latter technique is preferred but it would be difficult to achieve other than by using the process of the invention because the prior art systems require very short exposed lengths of elements for success. Such short lengths become impossible to achieve with the prior art procedure when electrical contact is required over a long strip of ends of filaments.

For high performance composite such as those based on poly(aryl ketones), such as poly(ether ether ketone) (sold under the trade mark 'Victrex' by Imperial Chemical Industries PLC), temperatures of up to 400°C or more must be achieved to melt the polymer matrix of the composite. It will be appreciated that it is only necessary to melt the surface regions of the thermoformable composite body in order to achieve bonding.

The method of the invention is applicable to the bonding of a reinforced thermoformable composite material to a dissimilar structural material such as a metal body particularly where the thermoformable polymer has excellent melt adhesion to metal. Poly(aryl) ethers, such as polyetheretherketones have particularly good adhesive strength to metals when applied as melts. Polyether imides are also suitable for bonding to metals.

The invention is further illustrated by reference to the following Examples.

## EXAMPLE 1

Two pieces of carbon fibre reinforced composite material in which the matrix polymer is a polyetheretherketone (available from Imperial Chemical Industries PLC as 'Victrex' APC 2) were welded together according to the following procedure. Each piece of composite material had been prepared by consolidating sixteen layers of APC 2 prepreg (dimensions 250mm x 250mm and about 0.02 mm thick) containing 68% by weight of unidirectional, collimated carbon fibres in the polyetheretherketone matrix. The sixteen layers were arranged with fibre orientations in the successive layers as follows: 0/45/90/-45/0/45/90/-45/-45/90/45/0/-45/90/45/0 wherein the numbers indicate the angle in degrees by which the fibre orientation in each prepreg layer differs from the orientation in the first reference layer (0). Consolidation had been effected at a temperature of 400°C under a pressure of 0.69 MPa (100 psi). Samples of composite having dimension 100mm x 250mm were used in the bonding procedure. The implant used was a strip of the same APC 2 prepreg used to form the composite material, having dimensions of 250mm wide and 90mm long with the unidirectional, collimated fibres disposed longitudinally in the shorter dimension of the prepreg. The ends of the prepreg were prepared for electrical contact by burning off the matrix polymer using an oxy-acetylene flame, and washing in acetone followed by water. Films of polyetheretherketone polymer having a thickness of 100 microns were cut to the dimensions intended to be bonded, i.e. 250mm x 12.5mm. In the assembly the films were placed above and below the implant and these were placed between the plaques to be bonded, arranging the plaques in stepped fashion to given an overlapping area of 250mm x 12.5 mm with the implant and films interposed between. The assembly was held together in a small jig with clamping pressure of 0.9 N/mm$^2$ applied using a spring loaded clamping beam. The clamped assembly was immersed in water. Electrical contact at the exposed ends of the implant was by bolted clamps with a soft lead face to give the necessary intimate contact.

A current of 330 amps was passed through the implant using a constant current power supply for twenty two seconds. The assembly was removed from the bath and visually appeared to have made a good bond with freedom from delamination degradation and exudation of matrix polymer at the edges.

In order to assess the bond strength a comparison was made by machining a 32 ply composite sheet so as to provide a specimen of the same dimensions as the 16 ply lap shear specimen. The lap shear strength of the bonded sample of the invention was measured as failing at a force of 30-35 MPa (five samples were measured). Various control samples as described gave failure values of 32 to 35 MPa.

## EXAMPLE 2

The procedure of Example 1 was repeated except in that implant dimensions were changed so that a bond of similar dimensions could be formed using a unidirectional pre-preg cut to dimensions of 250mm by 12.5 mm with the fibres being unidirectional in the longer direction. The assembly was clamped so that an implant area of 250mm x 12.5 mm was trapped between corresponding lapped areas of the composite pieces. The electrical contact had been prepared as described in Example 1 but along the longer edges of implant pre-preg. A bond of similar appearance and bond strength to that of Example 1 was obtained.

## EXAMPLE 3

Two pieces of composite material (250 mm x 25 mm) as used in Example 1 were welded together in accordance with the procedure of Example 1 (using 25 amps for 30 seconds), the elements of the implant running the length of the pieces. Good welds were obtained which upon fracture had appearances very similar to the welds obtained in Examples 1 and 2.

## Claims

1. A method of bonding together at least two members of structural material at least one of which is a fibre reinforced thermoformable composite material comprising assembling a plurality of electrically conductive elements between two surfaces of bodies of the structural materials, the elements extending beyond the surfaces of the bodies to provide means for passing a current through the elements, pressing the assembly together to provide positive contact between the elements and the bodies, passing a current through the conductive elements to melt the polymer of the surface regions of the thermoformable composite body, characterised in that the heating and pressing operation is conducted whilst at least those portions of the elements extending from between the bodies are immersed in a heat conductive liquid.

2. A method according to claim 1, characterised in that the electrically conducting elements are embedded in a thermoformable polymer which is the same as or compatible with the thermoformable body of the reinforced composite.

3. A method according to claim 1 or claim 2, characterised in that the elements are used in conjunction with the thin films of polymer having an areal shape corresponding to the paths of the implanted elements.

4. A method according to claim 3, characterised by interposing loose films between the elements and said surfaces.

5. A method according to claim 3, characterised by forming the films by melt or solution coating the polymers onto said surfaces.